# EUROPÄISCHE PATENTANMELDUNG

(11) **EP 2 869 029 A1**
(43) Veröffentlichungstag der Anmeldung: **06.05.2015**
(21) Anmeldenummer: 14184885.3
(22) Anmeldetag: 16.09.2014
(51) Int. Cl.: G01D 5/14, G01D 5/245

(54) **Positionsmesseinrichtung**

(30) Priorität: 30.10.2013 DE 102013222073
(71) Anmelder: Dr. Johannes Heidenhain GmbH, 83301 Traunreut (DE)
(72) Erfinder: Haible, Pascal, 83308 Trostberg (DE)

(57) **Zusammenfassung**

Die Erfindung betrifft eine Positionsmesseinrichtung mit einer Maßverkörperung (1, 1'), die in einem ersten Abschnitt (1.1) zur Erzeugung des ersten Signalpegels (H) eine erste Magnetisierung aufweist, welche derart ausgestaltet ist, dass diese in einer ersten Richtung (ξ; -ξ) orientiert ist, einen ersten Abstand (λ) zwischen zwei benachbarten ungleichnamigen Polen (N, S) aufweist und im Arbeitsabstand (Z) ein erstes Maximum der Feldstärke erzeugt. Weiterhin weist die Maßverkörperung (1, 1`) in einem zweiten Abschnitt (1.2), welcher benachbart zum dem ersten Abschnitt (1.1) angeordnet ist, zur Erzeugung des zweiten Signalpegels (L) eine zweite Magnetisierung auf, wobei diese in einer zweiten Richtung (-ξ; ξ) orientiert ist, einen zweiten Abstand (κ) zwischen zwei ungleichnamigen Polen (N, S) aufweist und im Arbeitsabstand (Z) ein erstes Maximum der Feldstärke erzeugt. Dabei ist die erste Richtung (ξ; -ξ) entgegen der zweiten Richtung (-ξ; ξ) orientiert, der erste Abstand (λ) größer als der zweite Abstand (κ) und das erste Maximum größer ist als das zweite Maximum. (Figur 1)

## Beschreibung

### GEBIET DER TECHNIK

Die Erfindung betrifft eine Positionsmesseinrichtung gemäß dem Anspruch 1, welche eine Maßverkörperung mit einer Magnetisierung zur positionsabhängigen Codierung aufweist. Die betreffenden Positionsmesseinrichtungen sind als Winkelmesssysteme oder auch als Längenmesssysteme einsetzbar.

Entsprechende Positionsmesseinrichtungen, ausgestaltet als Winkelmesseinrichtungen, dienen zur Messung von Drehbewegungen bzw. Drehstellungen eines Maschinenteils, etwa einer Welle, an der dann eine Maßverkörperung drehfest fixiert ist. Die Maßverkörperung, die in dieser Anwendung als Winkelskalierung bezeichnet werden kann, weist eine magnetische Codierung auf, die entsprechend abgetastet werden kann. Dabei wird die Drehbewegung insbesondere absolut erfasst, so dass der ausgegebene Messwert ein Codewort ist. Entsprechende Positionsmesseinrichtungen werden insbesondere in Werkzeugmaschinen verwendet.

Weiterhin können die erfindungsgemäßen Positionsmesseinrichtungen auch als Längenmesssysteme eingesetzt werden. Als Maßverkörperung kann in diesem Fall ein Maßstab oder ein zylindrischer, insbesondere hohlzylindrischer Körper dienen, welcher eine geeignete Magnetisierung aufweist. Die lineare Bewegung wird auch hier insbesondere absolut erfasst.

### STAND DER TECHNIK

Aus der JP H09-264760 A ist eine Positionsmesseinrichtung bekannt mit einer magnetischen Maßverkörperung, welche zur jeweiligen Erzeugung eines logischen Wertes "1" magnetisierte Bereiche aufweist und zur jeweiligen Erzeugung eines logischen Wertes "0" nicht-magnetisierte Bereiche aufweist.

### ZUSAMMENFASSUNG DER ERFINDUNG

Der Erfindung liegt die Aufgabe zu Grunde eine Positionsmesseinrichtung zu schaffen, welche sich insbesondere dadurch auszeichnet, dass diese eine hohe Messgenauigkeit liefert und bezüglich Toleranzen des Abtastabstandes vergleichsweise unempfindlich ist.

Diese Aufgabe wird durch eine Positionsmesseinrichtung gemäß dem Anspruch 1 gelöst.

Demnach umfasst die Positionsmesseinrichtung eine Maßverkörperung, die entlang einer Messrichtung magnetische (Nord- und Süd-) Pole aufweist. Weiterhin umfasst die Positionsmesseinrichtung eine Abtasteinheit, welche einen Sensor aufweist. Die Abtasteinheit ist so ausgestaltet, dass beim Abtasten der Maßverkörperung in einem Arbeitsabstand entlang der Messrichtung ein elektrisches Signal erzeugbar ist, welches abhängig von der Position des Sensors einen ersten Signalpegel oder einen zweiten Signalpegel annimmt. Die Maßverkörperung weist in einem ersten Abschnitt zur Erzeugung des ersten Signalpegels eine Magnetisierung auf, die mit einer ersten Feldstärke in einer ersten Richtung orientiert ist und einen ersten Abstand zwischen zwei benachbarten ungleichnamigen Polen aufweist. Weiterhin ist diese Magnetisierung derart ausgestaltet, dass diese im Arbeitsabstand ein erstes Maximum der magnetischen Feldstärke erzeugt. In einem zweiten Abschnitt der Maßverkörperung, welcher benachbart zum dem ersten Abschnitt angeordnet ist, weist die Maßverkörperung zur Erzeugung des zweiten Signalpegels ebenfalls eine Magnetisierung auf, die jedoch mit einer zweiten Feldstärke in einer zweiten Richtung orientiert ist und einen zweiten Abstand zwischen zwei benachbarten ungleichnamigen Polen aufweist. Außerdem ist die zweite Magnetisierung derart ausgestaltet, dass diese im Arbeitsabstand ein zweites Maximum der magnetischen Feldstärke erzeugt. Dabei ist die erste Richtung entgegen der zweiten Richtung orientiert beziehungsweise antiparallel zur zweiten Richtung orientiert und zudem ist die Maßverkörperung so ausgestaltet, dass im ersten Abschnitt der Abstand zwischen zwei benachbarten ungleichnamigen Polen (N - S; S - N) größer ist als im zweiten Abschnitt. Jeweils im Arbeitsabstand ist das Maximum der Feldstärke im ersten Abschnitt größer als das Maximum der Feldstärke im zweiten Abschnitt.

Die Maxima der Feldstärken sind also im Arbeitsabstand zu betrachten. Selbstredend ist diese Betrachtung nur in einem Bereich der Abtastspur beziehungsweise über die Breite der Abtastspur gültig. Die Stärke der Magnetfelder kann entweder mit der Einheit Ampere pro Meter quantifiziert werden oder es kann auch die so genannte magnetische Flussdichte, welche in Tesla gemessen wird, für diesen Zweck herangezogen werden. Die Orientierung der Magnetisierung bezieht sich auf die Feldlinienorientierung vom Nord- zu Südpol.

Die Längen der ersten und zweiten Abschnitte können den Abständen in Messrichtung zwischen einem Nordpol und dem benachbarten Südpol entsprechen, so dass also die Abschnitte durch benachbarte ungleichnamige Pole begrenzt sein können. Dabei kann geometrisch betrachtet ein und derselbe Pol die Abgrenzung zu zwei in Messrichtung benachbarten Abschnitten darstellen.

Der erste Signalpegel kann beispielsweise als High-Pegel verstanden werden, so dass dann der zweite Signalpegel ein Low-Pegel ist. Der High-Pegel kann als ein logischer Wert "1" weiterverarbeitet werden und demgemäß der Low-Pegel als ein logischer Wert "0". Selbstverständlich können auch umgekehrte Zuordnungen vorgenommen werden. Die Maßverkörperung weist also insbesondere ein Bitmuster zur Erzeugung einer Absolutposition auf. Durch die spezielle Magnetisierung der Maßverkörperung ist es nun möglich die geometrische Ausbildung der Feldlinien, insbesondere derjenigen der ersten Abschnitte, zu vergleichmäßigen, so dass präzisere Positionen der Übergänge von einem 1-Bit zu einem 0-Bit und von einem 0-Bit zu einem 1-Bit als bei herkömmlichen Positionsmesseinrichtungen detektierbar sind.

Die Abtasteinheit kann ein Signalaufbereitungsmittel aufweisen und / oder eine Vielzahl von Sensoren. Das Signalaufbereitungsmittel kann räumlich im Gehäuse der Abtasteinheit oder separat beziehungsweise außerhalb des betreffenden Gehäuses angeordnet sein.

Mit Vorteil ist zumindest einer der Sensoren als ein magnetoresistiver Sensor ausgebildet, so dass sich also durch äußere Magnetfelder der elektrische Widerstand des Sensors verändert. Derartige Sensoren können beispielsweise auf dem anisotropen magnetoresistiven Effekt (AMR-Effekt), dem Riesenmagnetowiderstand-Effekt (GMR-Effekt) oder dem TMR-Effekt basieren.

Weiterhin kann der Sensor insbesondere derart ausgestaltet sein, dass dieser seine maximale Empfindlichkeit bei einer Orientierung eines magnetischen Feldes mit Feldlinien orthogonal zum Arbeitsabstand erreicht. Das heißt, dass der Sensor maximal anspricht, wenn er sich in einer Position relativ zur Maßverkörperung befindet, in welcher die Feldlinien des magnetischen Feldes orthogonal zur Richtung des Arbeitsabstands orientiert sind. Diese Position ist in Messrichtung im Wesentlichen mittig zwischen zwei ungleichnamigen Polen. Dagegen spricht der Sensor weder in unmittelbarer Nachbarschaft zum Nordpol noch in unmittelbarer Nachbarschaft zum Südpol an, da dort die Feldlinien im Wesentlichen parallel zum Arbeitsabstand orientiert sind.

Alternativ können auch Hall-Sensoren verwendet werden.

In weiterer Ausgestaltung der Erfindung kann im ersten Abschnitt der erste Abstand zwischen zwei benachbarten ungleichnamigen Polen mindestens 1,5-mal so groß sein wie der zweite Abstand im zweiten Abschnitt. Beispielsweise kann im ersten Abschnitt der Abstand zwischen zwei benachbarten ungleichnamigen Polen doppelt so groß sein wie im zweiten Abschnitt.

In Weiterbildung der Erfindung ist im ersten Abschnitt der erste Abstand zwischen zwei benachbarten ungleichnamigen Polen n-mal so groß wie der zweite Abstand im zweiten Abschnitt, wobei n eine geradzahlige natürliche Zahl ist (n = 2·k, mit k = 1, 2, 3 ...). Insbesondere kann n den Wert 2 (k = 1) annehmen.

Mit Vorteil kann die Maßverkörperung so ausgestaltet sein, dass zwischen zwei gleichnamigen Polen an vorbestimmten Bereichen der Maßverkörperung unterschiedliche Abstände (N - N; S - S) vorliegen. Insbesondere kann die Maßverkörperung in einem Bereich zur Erzeugung des ersten Signalpegels einen anderen (insbesondere größeren) Abstand zwischen gleichnamigen Polen aufweisen als in einem Bereich der Maßverkörperung, welcher eine Magnetisierung zur Erzeugung des zweiten Signalpegels aufweist.

In einer vorteilhaften Ausbildung weist die Maßverkörperung einen dritten Abschnitt auf, der zwischen zwei zweiten Abschnitten angeordnet ist und selbst keine Magnetisierung aufweist. In diesem Fall kann der erste Abstand mindestens r-mal so groß wie der zweite Abstand sein, wobei r eine reelle Zahl größer als 1 ist.

Die erfindungsgemäße Positionsmesseinrichtung kann eine Maßverkörperung umfassen, die als linearer Maßstab zur Messung einer Länge ausgebildet ist. Alternativ kann die Maßverkörperung als Winkelskalierung zur Messung eines Winkels ausgebildet sein. In diesem Fall kann die Maßverkörperung eine Form gemäß einem Zylinder aufweisen, so dass die Magnetisierung an der Mantelseite des Zylinders hergestellt beziehungsweise die Codierung an der Mantelseite des Zylinders angeordnet ist. Andererseits kann bei einer als Winkelskalierung ausgestalteten Maßverkörperung in Form eines Zylinders die Magnetisierung auch an einer Stirnfläche des Zylinders hergestellt sein.

Vorteilhafte Ausführungsformen können aus den Merkmalen der abhängigen Ansprüche entnommen werden.

Weitere Merkmale und Vorteile der Erfindung werden bei der nachfolgenden Beschreibung zweier Ausführungsbeispiele anhand der Figuren deutlich werden.

### KURZE BESCHREIBUNG DER ZEICHNUNGEN

- Figur 1: eine vereinfachte Darstellung der Positionsmesseinrichtung und eines Signalverlaufs gemäß einem ersten Ausführungsbeispiel,
- Figur 2: eine vereinfachte Darstellung der Positionsmesseinrichtung und eines Signalverlaufs gemäß einem zweiten Ausführungsbeispiel.

### BESCHREIBUNG DER AUSFÜHRUNGSFORMEN

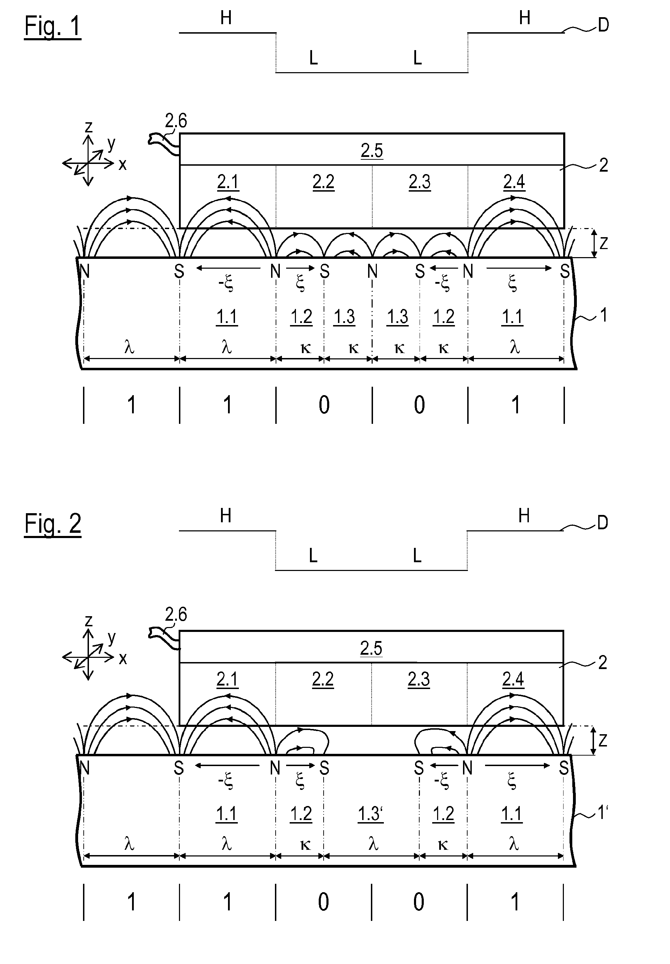

Gemäß der Figur 1 umfasst die Positionsmesseinrichtung eine Maßverkörperung 1. Die Maßverkörperung 1 ist im vorgestellten Ausführungsbeispiel aus ferromagnetischem Material hergestellt, beispielsweise aus einer Legierung mit den Komponenten Eisen, Chrom, Kobalt und Molybdän. Vorzugsweise ist die Maßverkörperung 1 auf einem in den Figuren nicht näher dargestellten Trägerkörper, etwa einem Ring oder einen Stab befestigt.

Um eine Codierung der Maßverkörperung 1 zu erreichen, ist diese derart magnetisiert, dass entlang einer Messrichtung x abwechselnd Nord- und Südpole N, S vorliegen. Die erzeugte Magnetisierung ist also eine permanentmagnetische Magnetisierung. Üblicherweise ist so ein Bit-Muster erzeugt, welches über die Messrichtung x jeweils eine gleichbleibende Länge λ der einzelnen Bits 0, 1 aufweist. In ersten Abschnitten 1.1 der Maßverkörperung 1 ist die Magnetisierung so ausgestaltet, dass dort Bits mit dem Wert "1" ausgelesen werden, wogegen in zweiten und dritten Abschnitten 1.2, 1.3 der Maßverkörperung 1 Bits mit dem Wert "0" ausgelesen werden. Die ersten Abschnitte 1.1 sind jeweils zu einem zweiten Abschnitt 1.2 benachbart angeordnet, beziehungsweise grenzen an einen zweiten Abschnitt 1.2 an. Zudem ist im gezeigten Beispiel die Länge der ersten und zweiten Abschnitte 1.1, 1.2 in x-Richtung gleich dem Abstand benachbarter, insbesondere ungleichnamiger, Pole N, S.

Die Magnetisierung in den ersten Abschnitten 1.1 der Maßverkörperung 1 weist eine erste Richtung ξ; -ξ mit einer ersten vergleichsweise großen Feldstärke auf. In den zweiten Abschnitten 1.2, welche jeweils benachbart zum einem ersten Abschnitt 1.1 angeordnet sind, wurde eine Magnetisierung in einer zweiten Richtung -ξ; ξ mit einer zweiten niedrigeren Feldstärke vorgenommen, wobei die erste Richtung ξ; -ξ entgegen der zweiten Richtung -ξ; ξ orientiert ist.

Die Abstände in Messrichtung x zwischen einem Nordpol N und einem benachbarten Südpol S im betreffenden ersten Abschnitt 1.1 sind jeweils größer als die Abstände zwischen einem Nordpol N und einem benachbarten Südpol S im betreffenden zweiten Abschnitt 1.2. Häufig werden diese Abstände auch als Ortsfrequenz bezeichnet, so dass in den ersten Abschnitten 1.1 eine niedrigere Ortsfrequenz angelegt ist als in den zweiten Abschnitten 1.2. Der Abstand zwischen ungleichnamigen Polen N, S im ersten Abschnitt 1.1 weist die Länge λ auf und in den zweiten und dritten Abschnitten 1.2, 1.3 ist diese Länge κ, wobei hier die Beziehung κ = λ/2 beziehungsweise λ = 2·κ gilt. Insbesondere sind die Längen λ, κ der ersten, zweiten und dritten Abschnitte 1.1, 1.2, 1.3 gleich den Abständen in Messrichtung x zwischen einem Nordpol N und dem benachbarten Südpol S. Die Magnetisierung beziehungsweise Codespur erstreckt sich in y-Richtung über eine vorbestimmte Breite, die mindestens der Breite der Abtastspur entspricht.

Ferner umfasst die Positionsmesseinrichtung eine Abtasteinheit 2. Diese ist in einem Arbeitsabstand Z, der parallel zur z-Richtung und orthogonal zur Messrichtung x orientiert ist relativ zur Maßverkörperung 1 angeordnet. Die Abtasteinheit 2 umfasst im vorgestellten Ausführungsbeispiel vier Sensoren 2.1, 2.2, 2.3, 2.4, die hier als magnetoresistive Sensoren ausgebildet sind. Demgemäß wandeln die Sensoren 2.1, 2.2, 2.3, 2.4 die magnetischen Felder der Maßverkörperung 1 in elektrische Rohsignale um, die einem Signalaufbereitungsmittel 2.5 beziehungsweise einer elektronischen Schaltung zugeführt werden. Aus den Rohsignalen werden digitale Signale D erzeugt, welche entweder den Signalpegel H oder L annehmen.

In einer Ebene (x, y - Ebene), die orthogonal zur z-Richtung orientiert und im Arbeitsabstand Z von der Maßverkörperung 1 entfernt ist, ist das Maximum der magnetischen Feldstärke, die durch die Magnetisierung im ersten Abschnitt 1.1 erzeugt wird, größer als das Maximum der magnetischen Feldstärke ausgelöst durch die Magnetisierung im zweiten Abschnitt 1.2. Aufgrund dieser unterschiedlichen Feldstärken beziehungsweise Maxima im Arbeitsabstand Z werden also die Sensoren 2.1 und 2.4 gemäß den Figuren beim Überstreichen der ersten Abschnitte 1.1 jeweils den Signalpegel H erzeugen, während die Sensoren 2.2 und 2.2 den Signalpegel L erzeugen, wenn sie sich im Arbeitsabstand Z gegenüber den zweiten und dritten Abschnitten 1.2, 1.3 befinden. Dieses Verhalten kann entweder dadurch erreicht werden, dass die Sensoren 2.1, 2.2, 2.3, 2.4 und die Feldstärken so aufeinander abgestimmt sind, dass die Sensoren 2.1, 2.2, 2.3, 2.4 zwar das magnetische Feld der Abschnitte 1.1 feststellen, jedoch für die reduzierte Feldstärke der zweiten und dritten Abschnitte 1.2, 1.3 keine Sensibilität aufweisen. Alternativ kann auch das Signalaufbereitungsmittel 2.5 die unterschiedlichen Rohsignale digitalisieren, wenn die Sensoren 2.1, 2.2, 2.3, 2.4 auf sämtliche Magnetfelder der Abschnitte 1.1, 1.2, 1.3 mit unterschiedlich hoher Reaktion ansprechen.

Die Sensoren sind so ausgestaltet, dass diese ihre maximale Empfindlichkeit bei einer Orientierung der magnetischen Feldlinien orthogonal zur z-Richtung erreichen, im vorliegenden Fall, wenn die Feldlinien parallel zur Messrichtung x ausgerichtet sind. Folglich erzeugen die Sensoren 2.1, 2.2, 2.3, 2.4 einen maximalen Pegel in ihren Rohsignalen, wenn sie sich in Messrichtung x im Arbeitsabstand Z mittig zwischen zwei ungleichnamigen Polen N, S befinden. Dagegen sind die Rohsignale minimal, wenn sich die Sensoren in unmittelbarer Nachbarschaft zu einem Nordpol oder zu einem Südpol befinden, da dort die Feldlinien im Wesentlichen in z-Richtung orientiert sind.

Durch das so erzeugte Signal D kann ein Codewort, hier zum Beispiel 1001, also bestehend aus vier Bits, gebildet werden, welches Auskunft über die absolute Relativposition zwischen Abtasteinheit 2 und Maßverkörperung 1 liefert. In der Praxis wird die Abtasteinheit 2 meist so ausgestaltet sein, dass diese in x-Richtung eine größere Länge als in den Figuren dargestellt aufweist, so dass auch wesentlich längere Codewörter erzeugt werden können. Über ein Kabel 2.6 kann das Signal D an eine Folgeelektronik übertragen werden.

In einem zweiten Ausführungsbeispiel nach Figur 2 weist eine Maßverkörperung 1' dritte Abschnitte 1.3' auf, die nicht magnetisiert sind. Dadurch werden zwar die Feldlinien der Abschnitte 1.2 gegenüber denjenigen des ersten Ausführungsbeispiels deformiert, dies spielt aber für die Abtastung der Maßverkörperung 1' keine Rolle, da das Magnetfeld im Arbeitsabstand Z für die Abschnitte 1.2, 1.3' ohnehin unter der Ansprechschwelle der Sensoren 2.1 - 2.4 liegt. Der dritte Abschnitt 1.3' weist die Länge κ auf, wobei auch hier die Beziehung κ = λ/2 beziehungsweise λ = 2·κ gilt.

Wenngleich die Maßverkörperungen 1, 1' gemäß den Figuren 1 und 2 linear dargestellt sind, ist die Erfindung nicht auf lineare Positionsmesssysteme beschränkt. Vielmehr kann die Positionsmesseinrichtung die Maßverkörperung als Winkelskalierung ausgebildet sein, beispielsweise können die Figuren 1 und 2 auch so interpretiert werden, dass die Maßverkörperungen 1, 1' auch als zylindrische Scheiben ausgebildet sind, an dessen Stirnseiten jeweils eine Magnetisierung beziehungsweise Codierung vorgesehen ist, so dass die Abtasteinheit 2 in axialem Arbeitsabstand Z zu betreffenden Maßverkörperungen 1, 1' angeordnet ist.

Die Ausgestaltung beziehungsweise Anordnung der Sensoren 2.1 - 2.4 ist in den vorgestellten Ausführungsbeispielen vereinfacht dargestellt. Es können beispielsweise auch mehr Sensoren als im Beispiel gezeigt zum Einsatz kommen, wobei dann die Sensoren so angeordnet sind, dass diese eine in x-Richtung überlappende Abtastung gewährleisten, wobei von einem einzelnen Sensor beispielsweise lediglich ein Bereich mit einer Länge von λ/2 abgetastet wird.

## Patentansprüche

1. Positionsmesseinrichtung umfassend
- eine Maßverkörperung (1; 1'), die entlang einer Messrichtung (x) magnetische Pole (N, S) aufweist, und
- eine Abtasteinheit (2), welche einen Sensor (2.1 - 2.4) aufweist und derart ausgestaltet ist, dass beim Abtasten der Maßverkörperung (1; 1') in einem Arbeitsabstand (Z) entlang der Messrichtung (x) ein elektrisches Signal (D) erzeugbar ist, welches einen ersten Signalpegel (H) oder einen zweiten Signalpegel (L) annimmt, wobei die Maßverkörperung (1; 1')
in einem ersten Abschnitt (1.1) zur Erzeugung des ersten Signalpegels (H) eine erste Magnetisierung aufweist, welche derart ausgestaltet ist, dass diese
in einer ersten Richtung (ξ; -ξ) orientiert ist,
einen ersten Abstand (λ) zwischen zwei benachbarten ungleichnamigen Polen (N, S) aufweist,
im Arbeitsabstand (Z) ein erstes Maximum der magnetischen Feldstärke erzeugt, und
in einem zweiten Abschnitt (1.2), welcher benachbart zum dem ersten Abschnitt (1.1) angeordnet ist, zur Erzeugung des zweiten Signalpegels (L) eine zweite Magnetisierung aufweist, welche derart ausgestaltet ist, dass diese
in einer zweiten Richtung (-ξ; ξ) orientiert ist,
einen zweiten Abstand (κ) zwischen zwei benachbarten ungleichnamigen Polen (N, S) aufweist,
im Arbeitsabstand (Z) ein zweites Maximum der magnetischen Feldstärke erzeugt, wobei
die erste Richtung (ξ; -ξ) entgegen der zweiten Richtung (-ξ; ξ) orientiert ist, der erste Abstand (λ) größer ist als der zweite Abstand (κ) und das erste Maximum größer ist als das zweite Maximum.

2. Positionsmesseinrichtung gemäß dem Anspruch 1, wobei der Sensor (2.1 - 2.4) als ein magnetoresistiver Sensor ausgebildet ist.

3. Positionsmesseinrichtung gemäß einem der vorhergehenden Ansprüche, wobei der Sensor (2.1 - 2.4) derart ausgestaltet ist, dass dieser seine maximale Empfindlichkeit bei einer Orientierung eines magnetischen Feldes mit Feldlinien orthogonal zum Arbeitsabstand (Z) erreicht.

4. Positionsmesseinrichtung gemäß einem der vorhergehenden Ansprüche, wobei der erste Abstand (λ) mindestens 1,5-mal so groß ist wie der zweite Abstand (κ).

5. Positionsmesseinrichtung gemäß einem der Ansprüche 1 bis 3, wobei der erste Abstand (λ) mindestens n-mal so groß ist wie der zweite Abstand (κ), wobei n eine geradzahlige natürliche Zahl ist.

6. Positionsmesseinrichtung gemäß dem Anspruch 5, wobei n den Wert 2 annimmt.

7. Positionsmesseinrichtung gemäß einem der vorhergehenden Ansprüche, wobei die Maßverkörperung (1') einen dritten Abschnitt (1.3') aufweist, wobei der dritte Abschnitt (1.3') zwischen zwei zweiten Abschnitten (1.2) angeordnet ist und keine Magnetisierung aufweist.

8. Positionsmesseinrichtung gemäß einem der vorhergehenden Ansprüche, wobei die Maßverkörperung (1, 1') unterschiedliche Abstände zwischen zwei gleichnamigen Polen (N, N; S, S) aufweist.

9. Positionsmesseinrichtung gemäß einem der vorhergehenden Ansprüche, wobei die Maßverkörperung (1; 1') als eine Winkelskalierung ausgebildet ist.

10. Positionsmesseinrichtung gemäß dem Anspruch 9, wobei die Maßverkörperung (1; 1') eine Form gemäß einem Zylinder aufweist und die Magnetisierung an der Mantelseite des Zylinders hergestellt ist.
